# EUROPÄISCHE PATENTSCHRIFT

(11) **EP 1 272 924 B1**
(45) Veröffentlichungstag und Bekanntmachung des Hinweises auf die Patenterteilung: **20.10.2004**
(21) Anmeldenummer: 01940309.6
(22) Anmeldetag: 09.04.2001
(51) Int. Cl.: G06F 3/12

(54) **VERFAHREN ZUM ERSTELLEN UND AUSGEBEN EINES DOKUMENTS**
METHOD FOR CREATING AND OUTPUTTING A DOCUMENT
PROCEDE DE PRODUCTION ET D'EMISSION D'UN DOCUMENT

(30) Priorität: 11.04.2000 DE 10017892
(43) Veröffentlichungstag der Anmeldung: 08.01.2003
(73) Patentinhaber: Océ Printing Systems GmbH, 85586 Poing (DE)
(72) Erfinder: SCHWIER, Hartwig, 81675 München (DE)
(74) Vertreter: Schaumburg, Thoenes, Thurn, Landskron Patentanwälte
(86) Internationale Anmeldenummer: PCT/EP2001/004059
(87) Internationale Veröffentlichungsnummer: WO 2001/077805

(56) Entgegenhaltungen:
- US-A- 5 515 481
- US-A- 5 644 682

## Beschreibung

Die Erfindung betrifft ein Verfahren zum Erstellen und Ausgeben mindestens eines Dokuments. Mit Hilfe eines Erstellungs-Programmoduls wird ein Dokument mit mindestens einer Druckseite erstellt. Das Dokument enthält erste Bilddaten von Bildelementen. Eine Ausgabeeinheit gibt auf der Grundlage zweiter Bilddaten Bildelemente aus, deren Bildeigenschaften durch einen Ausgabeparametersatz festgelegt werden. Die Ausgabeeinheit gibt das Dokument mit den an den Ausgabeparametersatz angepaßten Bilddaten aus. Weiterhin betrifft die Erfindung ein Computerprogramm sowie ein System zum Durchführen des Verfahrens.

Bei Datenverarbeitungssystemen werden Bilddaten von Druckseiten auf Ausgabeeinheiten, z.B. auf Bildschirmen und auf Druckern, ausgegeben. Die Bilddaten von Druckseiten werden mit Hilfe eines Erstellungs-Programmoduls, z.B. mit einem Textverarbeitungsprogramm, mit einem Formulareditor oder mit einem Desk Top Publishing-Programmodul (DTP-Programmodul), erzeugt. Zur Ausgabe der Bilddaten müssen diese Bilddaten umgewandelt werden, damit die jeweilige Ausgabeeinheit diese Daten verarbeiten kann. Diese Umwandlung wird z.B. mit Hilfe eines Druckertreiber-Programmoduls bei der Ausgabe der Druckseite durch einem Drucker oder mit Hilfe eines Bildschirmtreiber-Programmoduls bei der Ausgabe der Druckseite auf einer Anzeigeeinheit durchgeführt. Druckertreiber- und Bildschirmtreiber-Programmodule werden auch als Ansteuerprogrammodule bezeichnet.

Beim Umwandeln werden die Bilddaten entsprechend dem durch das Ansteuerprogrammodul vorgegebenen Ausgabeparametersatz so in zweite Bilddaten umgewandelt, daß diese zweiten Bilddaten den Ausgabeparametern des voreingestellten Ausgabeparametersatzes entsprechen. Der Ausgabeparametersatz enthält z.B. die Ausgabeparameter Auflösung und Farbtiefe der Ausgabeeinheit.

In dem Druckertreiber-Programmodul läßt sich für alle zu druckenden Druckseiten ein Ausgabeparametersatz des Drukkers voreinstellen. Das Voreinstellen erfolgt vorzugsweise in Formularen des Druckertreibers, sogenannte Registerkarten des Druckertreibers. Dabei können Standardparameter, wie z.B. der Kontrast, die Helligkeit, eine Reduzierung der möglichen Ausgabeauflösung des Druckers, die Papierzufuhr, das Papierformat, die gewünschte Farbmischung und die gewünschte Druckdichte, voreingestellt werden. Auch sind je nach Druckertyp Einstellungen zum Aktivieren von Duplexdruckverfahren, zum Aktivieren des Farbdrucks sowie zur Farbanpassung möglich.

Die Druckseiten des Dokuments können aus verschiedenartigen Bildelementen erstellt worden sein, die unterschiedliche Anforderungen an die Ausgabeparameter der Ausgabeeinheit stellen. Dem Stand der Technik sind z.B. Druckertreiber bekannt, bei denen ein Ausgabeparametersatz für einen Druckauftrag einstellbar ist, d.h. die Ausgabeparameter sind für das gesamte Dokument einheitlich voreinstellbar. Ein Druckauftrag ist dabei die Anweisung, eine oder mehrere Druckseiten eines Dokuments mit dem voreingestellten Ausgabeparametersatz auf einem ausgewählten Drucker auszugeben. Sollen auf einer der Druckseiten des Dokuments Bildelemente ausgegeben werden, die im Hinblick auf die Bildqualität besonders hohe Anforderungen an die Ausgabeparameter des ausgewählten Druckers stellen, werden diese komplexen Ausgabeparameter, z.B. in Formularen des Drukkertreibers, für den gesamten Druckauftrag voreingestellt. Die übrigen Bildelemente des Druckauftrags, z.B. Bildelemente, die Text enthalten, werden mit den gleichen besonderen Ausgabeparametern ausgegeben, obwohl für die Darstellung dieser Bildelemente einfache Ausgabeparameterausreichen, um sie mit hoher Qualität darzustellen. So werden beim Stand der Technik die Druckseiten eines Dokuments, die ausschließlich Bildelemente enthalten, die keine komplexen Ausgabeparameter erfordern, in einem separaten Druckauftrag mit entsprechend einfachen voreingestellten Ausgabeparametern ausgegeben. Diese Bildelemente werden z.B. einfarbig schwarz mit einer Auflösung von 300 dots per inch (dpi) ausgegeben. In einem weiteren Druckauftrag werden die Seiten des Dokuments ausgegeben, die Bildelemente enthalten, die komplexe Ausgabeparameter erfordern. Dabei werden Ausgabeparameter voreingestellt, die zum Ausgeben dieser Bildelemente erforderlich sind. So werden diese Seiten, die komplexe Bildelemente enthalten, z.B. in einem Farbdruck mit einer Farbtiefe von 4-Bit (16 Farben) und eine Auflösung von 600 dpi ausgegeben. Eine performanceangepaßte Ausgabe der Bildelemente ist nicht möglich.

In den deutschen Patentanmeldungen DE 199 11 462.5, DE 199 11 461.7 und 100 17 893.3 (Zeichen der Anmelderin: 2000-0408 DE) sind Druckertreiber für Hochleistungsdrucksysteme beschrieben.

In der EP 0 971 309 A2 ist ein Verfahren und ein System beschrieben, mit denen Dokumente, die verschiedene Elemente enthalten, mit gesteuerten Parametern an einen Drucker ausgebbar sind.

Aus dem Dokument US 5,644,682 ist ein Verfahren und ein System zum Einfügen zusätzlicher Indizierungen in ein Dokument bekannt. Das Dokument wird dabei mit Hilfe eines Anwenderprogramms erzeugt. Ein Subprogramm überwacht einen Datenstrom mit Dokumentdaten des Dokuments und fügt die Indizierungsdaten hinzu.

Aus dem Dokument US 5,515,481 A ist ein Verfahren und eine Vorrichtung zum Erzeugen von Dokumentbeschreibungsbefehlen der Grundlage von Druckkommandos, wobei die Dokumentbeschreibungskommandos geräteunabhängige Druckkommandos enthalten. Ferner ist aus diesem Dokument ein System zum Erzeugen eines Druckbilds auf eine Druckseite bekannt, das paarweise Druckdaten aus unterschiedlichen Datenquellen enthält.

Aufgabe der Erfindung ist es, eine Möglichkeit zu schaffen, Bildelemente von Druckseiten mit einem Druckauftrag performanceangepasst auszugeben sowie die Bilddaten von Bildelementen für die Ausgabe auf einer Ausgabeeinheit individuell so anzupassen, dass ein für den Betrachter qualitativ hochwertiges Erscheinungsbild entsteht.

Diese Aufgabe wird durch ein Verfahren mit den Merkmalen des Patentanspruchs 1 gelöst. Vorteilhafte Ausgestaltungen der Erfindung werden in den abhängigen Ansprüchen angegeben.

Durch das Zuordnen eines Darstellungsparameters zu jeweils einem Abschnitt des Dokuments ist es möglich, die Abschnitte des Dokuments mit dem Ausgabeparametersatz auszugeben, der dem jeweiligen Darstellungsparameter zugeordnet ist. Die Zuordnung der Darstellungsparameter zu den Ausgabeparametersätzen ist z.B. im Ansteuerprogrammmodul voreinstellbar. Somit können einzelne Abschnitte von Dokumenten durch die Zuordnung von jeweils einen Darstellungsparameter performanceangepasst ausgegeben werden, da die Ausgabe von Bildelementen mit einfachen Ausgabeparametern Zeit und Verbrauchsmaterial und somit auch Kosten einspart. Weiterhin ist es mit Hilfe der Darstellungsparameter möglich, die Bilddaten der Abschnitte des Dokuments individuell anzupassen. Die Voreinstellungen der Ausgabeparameter umfassen insbesondere auch die Farbtiefe, die Farbzuordnung sowie weitere Parameter, die den Farbraum der darzustellenden Bilddaten bei der Umwandlung der Bilddaten festlegen. Zum Umwandeln werden z.B. die Bildverarbeitungs-Prozeduren bekannter Druckertreiberprogrammmodule genutzt.

Ein zweiter Aspekt der Erfindung betrifft ein Verfahren zum Ausgeben eines Dokuments mit den Merkmalen des Patentanspruchs 2. Durch dieses Verfahren können mit Hilfe des den Abschnitten des Dokuments zugeordneten Ausgabeparametern für diese Abschnitte geeignete und gewünschte Ausgabeparameter der Ausgabeeinheit ausgewählt werden. Somit können optimale Druckergebnisse erzielt werden, ohne dass bereits beim Erstellen des Dokuments die Ausgabeeinheit bzw. mögliche Ausgabeparameter der Ausgabeeinheit bekannt sind.

Mit Hilfe der Darstellungsparameter ist es bei einer Weiterbildung der Erfindung auch möglich, die Druckseiten je nach Darstellungsparameter automatisch auf unterschiedlichen Ausgabeeinheiten auszugeben, die unterschiedliche Ausgabeparameter haben können. Dadurch ist es möglich, die Druckseiten eines Dokuments, deren Bildelemente nur einfache, d.h. niederwertige Ausgabeparameter benötigen, auf einem Drucker auszugeben, der zu der Ausgabe von diesen Bildelementen geeignet ist. Die Druckseiten mit komplexen, d.h. mit höherwertigen Bildelementen werden mit Hilfe eines weiteren Druckers ausgegeben, der entsprechend höherwertige Ausgabeparameter hat. Somit können kostengünstige Druckverfahren zur Ausgabe von Druckseiten mit unterschiedlichen Anforderungen an die Ausgabeparameter der Drucker einfach realisiert werden.

Vorteilhaft ist es auch, die Druckseiten mit Hilfe einer ersten Recheneinheit zu erstellen und zu einem viel späteren Zeitpunkt mit Hilfe von einer an eine zweite Recheneinheit angeschlossene Ausgabeeinheit auszugeben. Die erfindungsgemäße Zuordnung des jeweiligen Darstellungsparameters kann in dieser zweiten Recheneinheit z.B. durch Eingaben einer Bedienperson erfolgen.

Gemäß den Merkmalen des Anspruchs 16 wird eine Computersoftware angegeben, die Befehle und Daten umfasst, die nach dem Laden der Computersoftware ein Datenverarbeitungssystem bzw. ein Computersystem veranlassen, die in einem der Verfahrensansprüche genannten Schritte auszuführen. Dadurch wird erreicht, dass das erfindungsgemäße Verfahren mit Hilfe eines Computersystems ausführbar ist. Vorteilhaft ist es, diese Computersoftware auf einem Speichermedium zu speichern, um sie in Datenverarbeitungsanlagen zu verarbeiten.

Ein dritter Aspekt der Erfindung betrifft eine Vorrichtung zum Erstellen eines Dokuments, mit den Merkmalen des Anspruchs 18, die geeignet ist, das erfindungsgemäße Verfahren nach Anspruch 1 durchzuführen. Vorzugsweise ist eine solche Vorrichtung ein Datenverarbeitungs -bzw. ein Computersystem. Mit einem solchen System lassen sich Druckseiten erstellen, wobei die Bilddaten von Abschnitten dieser Druckseite mit unterschiedlichen Ausgabeparametern in einem Druckauftrag ausgeben werden.

Ein vierter Aspekt der Erfindung betrifft eine Vorrichtung zum Ausgeben eines Dokuments mit den Merkmalen des Patentanspruchs 19. Diese Vorrichtung ist geeignet, das erfindugnsgemäße Verfahren nach Anspruch 2 durchzuführen. Durch diese Vorrichtung können mit Hilfe des Darstellungsparameters P eine Auswahl von Ausgabeparamtern unter einer Vielzahl möglicher Ausgabeparameter für die Ausgabeeinheit festgelegt werden. Dadurch können auf einfache Art und Weise für die Ausgabeeinheit geeignete Ausgabeparameter festgelegt werden.

Weitere Merkmale und Vorteile der Erfindung ergeben sich aus der folgenden Beschreibung, welche in Verbindung mit den beigefügten Zeichnungen die Erfindung anhand eines Ausführungsbeispiels erläutert. Es zeigen:
- Figur 1: ein Computersystem, mit dem eine Druckseite gemäß der Erfindung erstellt, aufbereitet und ausgedruckt wird,
- Figur 2: einen Ablaufplan zum Erstellen und Ausgeben einer Druckseite gemäß einer Ausführungsform der Erfindung,
- Figur 3: eine Druckseite, die in mehrere Abschnitte unterteilt ist, wobei jedem Abschnitt ein Darstellungsparameter zugeordnet ist,
- Figur 4: mehrere Druckseiten, denen jeweils ein Darstellungsparameter zugeordnet ist,
- Figur 5: ein Formular eines Druckertreiber-Programmmoduls, gemäß dem Stand der Technik, zum Voreinstellen der Ausgabeparameter eines Druckers,
- Figur 6 bis Figur 8: Formulare eines Druckertreiber-Programmoduls gemäß Ausführungsformen der Erfindung, und
- Figur 9: ein weiteres Formular eines Druckertreiber-Programmoduls, gemäß dem Stand der Technik, zum Voreinstellen der Farbanpassung von auszugebenden Bildelementen.

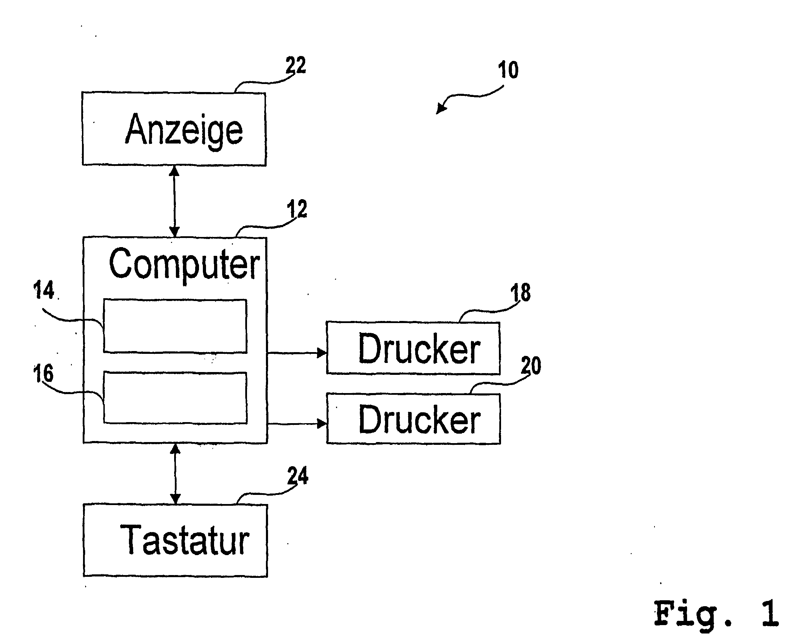

In Figur 1 ist ein Computersystem 10 dargestellt, mit dem eine Druckseite gemäß der Erfindung erstellt, aufbereitet und ausgedruckt werden kann. Eine Recheneinheit 12, z.B. ein Computer, enthält mehrere Programmodule, von denen ein Textverarbeitungsprogrammodul 14 und ein Druckertreiberprogrammodul 16 dargestellt ist. Der Computer 12 ist mit zwei Druckern 18, 20 verbunden. Der Drucker 18 kann Druckseiten mit einer Auflösung von 300 dpi schwarz/weiß ausgeben. Der Drucker 20 kann Druckseiten mit einer Auflösung von 600 dpi im Zweifarbendruck, dem sogenannten Highlightcolor-Druck, ausgeben. Diese betriebsbedingten Eigenschaften der Drucker 18, 20 werden als Ausgabeparameter bezeichnet.

Weiterhin ist der Computer 12 mit einer Anzeigeeinheit 22, z.B. einem Bildschirm, und mit einer Eingabeeinheit 24, z.B. mit einer Tastatur, verbunden. Der Bildschirm 22 und die Tastatur 24 dienen als Mensch-Maschine-Schnittstelle zwischen einer Bedienperson (nicht dargestellt) und dem Computer 12.

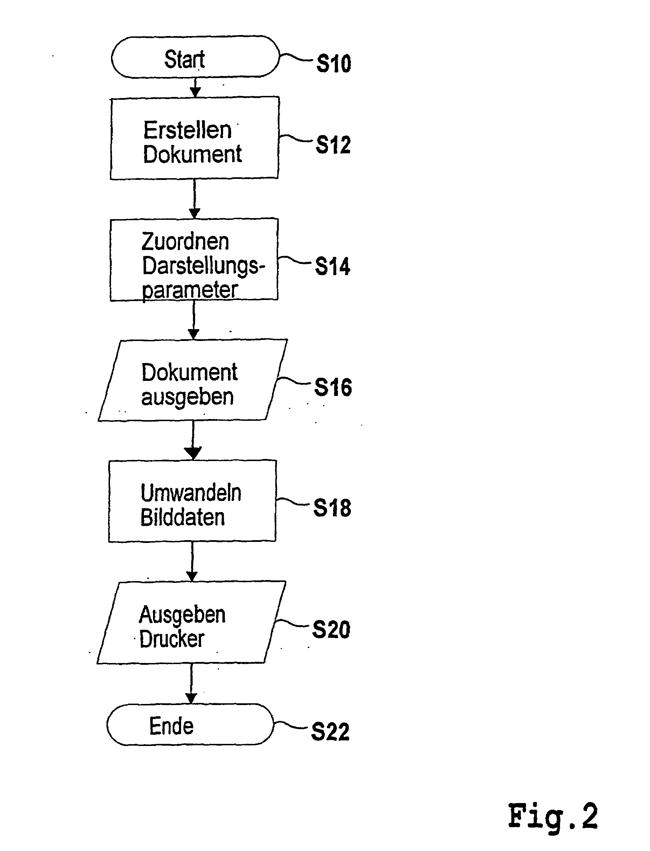

In Figur 2 ist ein Ablaufplan zum Erstellen und Ausgeben einer Druckseite gemäß einer Ausführungsform der Erfindung dargestellt. Der Ablauf wird im Schritt S10 gestartet. Im Schritt S12 erzeugt die Bedienperson Hilfe des Textverarbeitungsprogrammoduls 14 Bilddaten eines Dokuments, das mindestens eine Druckseite enthält. Anschließend ordnet die Bedienperson Abschnitten des Dokuments im Schritt S14 je einen Darstellungsparameter zu. Im Schritt S16 gibt die Bedienperson die Anweisung das Dokument auf dem Drucker 18 auszugeben. Mit Hilfe des Druckertreibers 16 werden die Bilddaten des Dokuments im Schritt S18 in zweite Bilddaten umgewandelt. Die ersten Bilddaten werden dabei so umgewandelt, daß die zweiten Bilddaten in der Druckersprache des Druckers 18 vorliegen. Die Druckersprache kann dabei z.B. eine Postscript-, eine PCL- oder eine AFP-Druckersprache sein. Die Druckersprache ist ein bestimmtes Datenformat, in dem Bilddaten zu Druckern 18, 20 übertragen und von diesen weiterverarbeitet werden. Für unterschiedliche Drucker 18, 20 mit unterschiedlichen Ausgabeparametern sowie für unterschiedliche Druckertypen 18, 20 ist jeweils ein Druckertreiber 16 vorhanden. In dem erfindungsgemäßen Druckertreiber 16 sind für einzelne Dokumentabschnitte die Ausgabeparameter des Druckers 18, vorzugsweise in Formularen des Druckertreibers 16, voreinstellbar. Die Zuordnung der Dokumentabschnitte zu den voreingestellten Ausgabeparametersätzen des Druckers 18 erfolgt vorzugsweise mit Hilfe des dem jeweiligen Abschnitt zugeordneten Darstellungsparameters. Dabei können Standardparameter, wie z.B. der Kontrast, die Helligkeit, eine Reduzierung der möglichen Ausgabeauflösung des Druckers 18, die Papierzufuhr, das Papierformat und die gewünschte Druckdichte, für die einzelnen Dokumentabschnitte voreingestellt werden. Bei dem Drucker 20 sind zusätzliche Einstellungen zum Aktivieren des HighlightColor-Drucks, zum Voreinstellen der gewünschten Farbmischung und Voreinstellungen zur Farbanpassung, d.h. Voreinstellungen, die den Farbraum der ausgegebenen Bilddaten festlegen, für die einzelnen Abschnitte der Druckseite möglich, die durch den jeweiligen Darstellungsparameter spezifiziert sind.

Anschließend werden die Bilddaten in der PCL-Druckersprache zu dem Drucker 18 übertragen. Der Drucker 18 verarbeitet die Bilddaten weiter und gibt das den übermittelten Bilddaten entsprechenden Druckbild im Schritt S20 auf einem Trägermaterial, z.B. auf Papier, aus. Im Schritt S22 ist der Ablauf beendet.

Anhand der Darstellungsparameter ist es z.B. bei Dokumenten, die mehrere Druckseiten enthalten, möglich, ganzen Druckseiten jeweils einen Darstellungsparameter zuzuweisen, die auf dem Drucker 20 ausgegeben werden sollen. Ein Abschnitt umfaßt also eine volle Druckseite. So können z.B. solchen Seiten, die farbige Bildelemente enthalten, Darstellungsparameter zugeordnet werden, die den Druckertreiber veranlassen, die Bilddaten aller Bildelemente dieser Seiten in die AFP-Druckersprache des Druckers 20 umzuwandeln und diese umgewandelten Daten zu dem Drucker 20 zu übertragen. Die Bilddaten der übrigen Druckseiten werden in die PCL-Druckersprache des Druckers 18 gemäß den jeweiligen Darstellungsparametern umgewandelt. Dadurch ist es möglich, einzelne Druckseiten des Dokuments auf verschiedenen Druckern 18, 20 auszugeben und dabei einzelnen Abschnitten der Druckseite unterschiedliche Ausgabeparameter des jeweiligen Druckers 18, 20 zuzuordnen. Die Umwandlung der Bilddaten in die PCL-Druckersprache des Druckers 18 und die Umwandlung der Bilddaten in die AFP-Druckersprache des Druckers 20 kann dabei auch in zwei verschiedenen Druckertreibern erfolgen. Die Bilddaten aller Druckseiten werden dann z.B. beiden Druckertreibern zugeführt, wobei die Druckertreiber nur die Daten mit solchen Darstellungsparametern weiterverarbeiten, denen in dem jeweiligen Druckertreiber Ausgabeparametersätze zugeordnet sind.

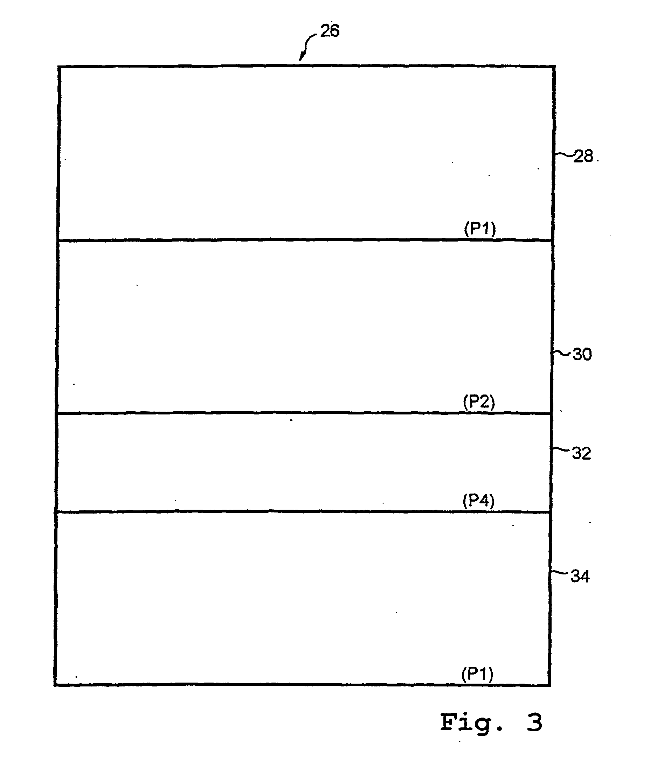

In Figur 3 ist eine Druckseite 26 dargestellt, die in mehrere Abschnitte 28, 30, 32, 34 unterteilt ist, wobei jedem Abschnitt 28, 30, 32, 34 je ein Darstellungsparameter P zugeordnet ist. Den Abschnitten 28 und 34 ist dabei der Parameter P1, dem Abschnitt 20 der Parameter P2 und dem Abschnitt 32 der Parameter P4 zugeordnet. Es ist ebenfalls möglich die Abschnitte 28 bis 32 alle mit dem gleichen Darstellungsparameter zu versehen.

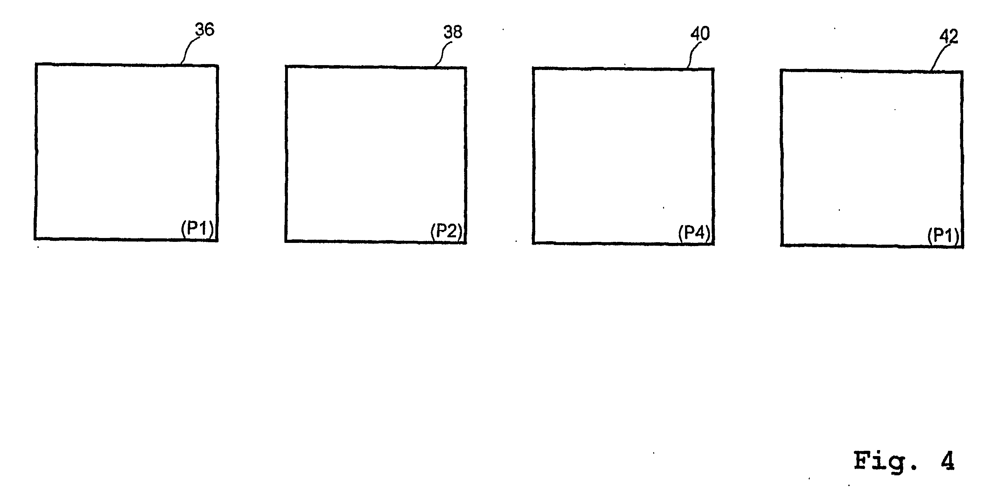

In Figur 4 sind mehrere Druckseiten 36, 38, 40, 42 dargestellt, denen jeweils ein Darstellungsparameter P zugeordnet ist. Der gesamten Druckseite 36 und der Druckseite 42 ist der Darstellungsparameter P1 zugeordnet, der Druckseite 38 ist der Darstellungsparameter P2 zugeordnet und der Druckseite 40 ist der Darstellungsparameter P4 zugeordnet.

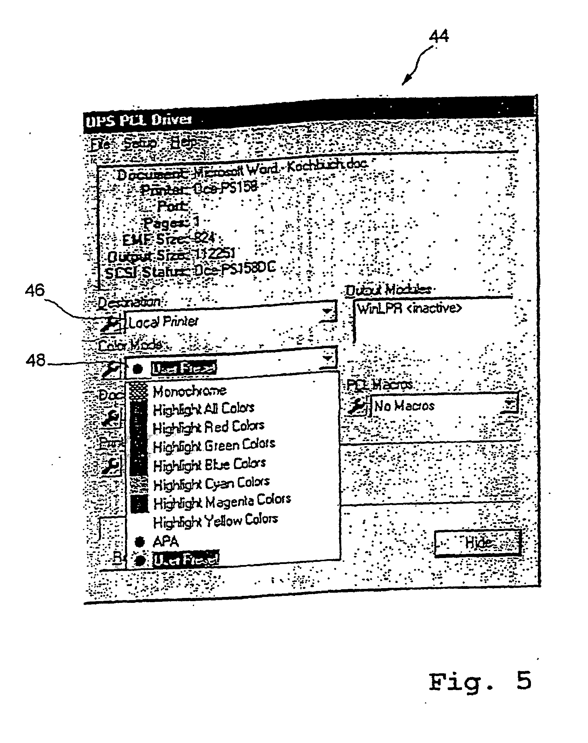

In Figur 5 ist ein Formular 44 eines Druckertreiber-Programmoduls nach dem Stand der Technik dargestellt, in dem eine Bedienperson Ausgabeparameter einstellen kann, die weiter oben bereits beschrieben wurden. Über verschiedene Menüs, vorzugsweise über sogenannte Pull-Down-Menüs, von denen zwei mit 46 und 48 bezeichnet sind, kann die Bedienperson einen Drucker 18, 20 auswählen, der an dem Computer 12 angeschlossenen ist, sowie dessen Ausgabeparameter voreinstellen. Werden anschließend, z.B. durch Eingabe einer Anweisung der Bedienperson, dem Druckertreiber Bilddaten übergeben, wandelt der Druckertreiber diese gemäß den Voreinstellungen in zweite Bilddaten um, die dann in der Druckersprache des ausgewählten Druckers vorliegen und diesem zur Weiterverarbeitung übergeben werden.

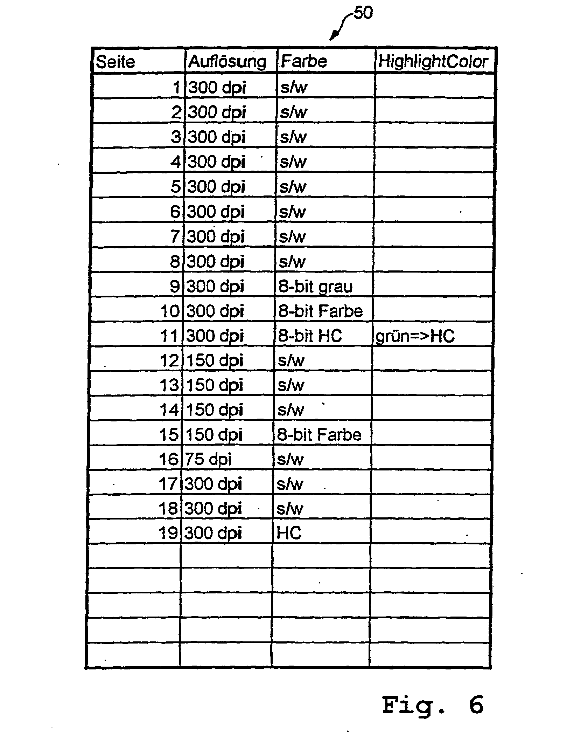

In Figur 6 ist ein Formular 50 eines erfindungsgemäßen Druckertreibers 16 dargestellt. Das in der Figur 5 gezeigte Formular 44 des Druckertreibers nach dem Stand der Technik ist zusätzlich zu dem in Figur 6 gezeigten Formular 50 in dem Druckertreiber 16 enthalten, so daß alle Einstellmöglichkeiten nach dem Stand der Technik auch in dem erfindungsgemäßen Druckertreiber 16 enthalten sind. Weitere Formulare mit weiteren Einstellmöglichkeiten nach dem Stand der Technik sind auch in dem erfindungsgemäßen Druckertreiber 16 denkbar. Das Formular 50 hat eine Tabellenform, wobei die Seitennummern des auszudruckenden Dokuments in der linken Spalte eingetragen sind. Jeder Seite werden in der jeweiligen Tabellenzeile die Ausgabeparameter Auflösung, Farbe und Farbzuordnung (HighlightColor) zugewiesen. Die der jeweiligen Seite zugewiesenen Ausgabeparameter bilden einen Ausgabeparametersatz, der Vorgaben enthält, denen die zweiten Bilddaten nach dem Erstellen aus den ersten Bilddaten bei der Ausgabe auf dem ausgewählten Drucker entsprechen. Weitere Ausgabeparameter, die der entsprechenden Seite zugeordnet werden können, sind denkbar.

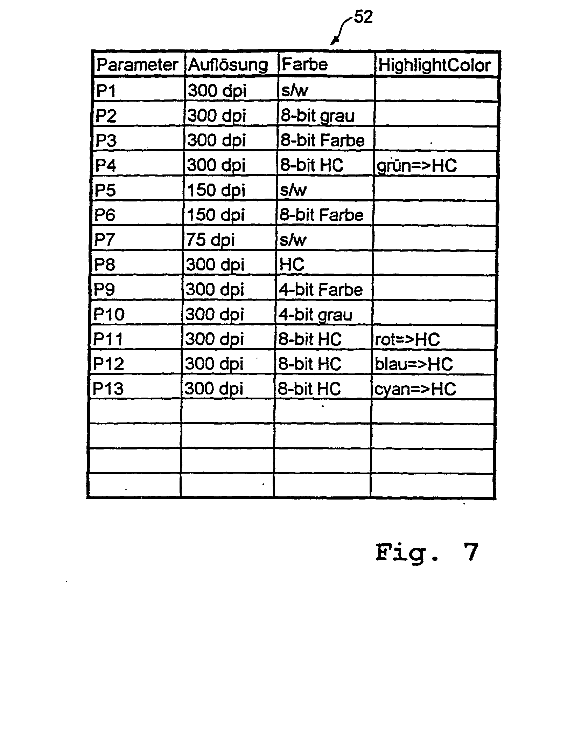

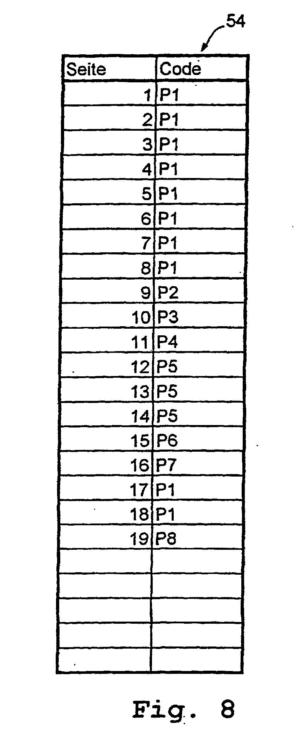

In Figur 7 und 8 sind zwei Formulare 52, 54 eines weiteren erfindungsgemäßen Druckertreibers dargestellt, die anstelle oder zusätzlich zu dem Formular 50 aus Figur 6 in dem Druckertreiber enthalten sind. In dem Formular 52 werden dabei Darstellungsparameter P1 bis P13 definiert, die in der ersten Spalte des Formulars 52 angeordnet sind. In jeder Tabellenzeile sind die Ausgabeparameter wie in dem Formular 50 aus Figur 6 eingetragen, die jedoch anstatt den Seiten 1 bis 19 den Darstellungsparameter P1 bis P13 zugeordnet sind. In dem Formular 54 der Figur 8 werden den Seiten die Darstellungsparameter P zugeordnet, die in dem Formular 52 definiert sind. Gegenüber dem Formular 50 haben die Formulare 52 und 54 den Vorteil, daß den Seiten in dem Formular 54 nur die Darstellungsparameter P1 bis P13 zugeordnet werden müssen. Die Definition der Darstellungsparameter P1 bis P13 muß somit auch für die Ausgabe unterschiedlicher Dokumente nur einmal definiert werden. Die Zuordnung der Darstellungsparameter P1 bis P13 zu den Seiten des Dokuments erfolgt für jedes Dokument individuell. Die Anzahl der durch die Bedienperson definierbaren Darstellungsparameter P ist dabei nicht begrenzt.

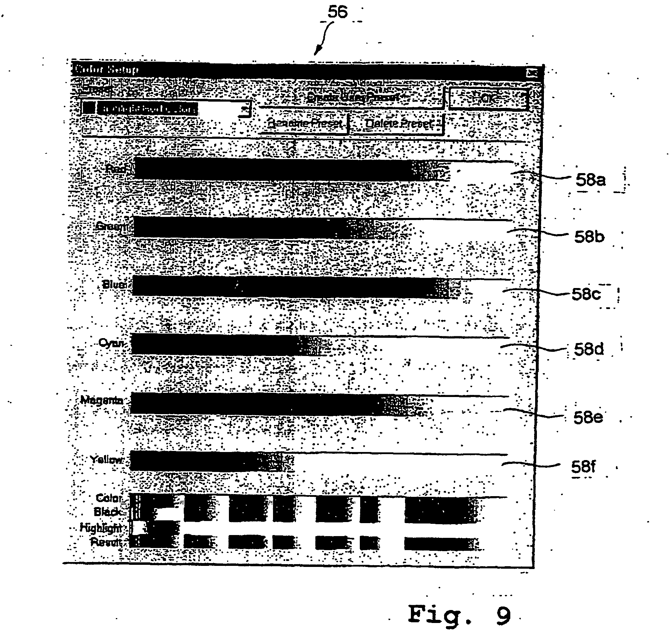

In Figur 9 ist ein weiteres Formular 56 eines Druckertreiber-Programmoduls zum Voreinstellen der Farbanpassung von auszugebenden Bildelementen dargestellt. Solche Formulare zur Farbanpassung sind im Stand der Technik bekannt. Diese Farbeinstellungen wurden für die Ausgabe eines ganzen Dokuments festgelegt. Unterschiedliche Einstellungen dieser Ausgabeparameter zur Farbdarstellung von auszugebenden Bildelementen, die auch den Farbraum der auszugebenden Bildelemente beschreiben, können bei einem erfindungsgemäßen Druckertreiber zusammen mit weiteren Ausgabeparametern einem Darstellungsparameter P zugeordnet werden. Durch die Zuordnung von unterschiedlichen Darstellungsparametern P zu Abschnitten des Dokuments können bei der Ausgabe auf der ausgewählten Ausgabeeinheit 18 unterschiedliche Darstellungsvarianten und Effekte sowie unterschiedliche Wirkungen der ausgegebenen Bildelemente erzielt werden. Bei dem dargestellten Formular 56 wird die Intensität, mit der jede der darstellbaren Farben bei der Umwandlung der Bilddaten berücksichtigt wird, mit Hilfe von Einstellskalen 58a bis 58f festgelegt. Mit dem erfindungsgemäßen Druckertreiber können diese Voreinstellungen für jeden Abschnitt individuell erfolgen. Weitere Einstellmöglichkeiten, insbesondere zum definieren und zum Anpassen des Farbraums sind möglich. Solche Anpassungen werden auch als Color-Mapping bezeichnet. Diese Anpassungen sind vor allem dann notwendig, wenn die Farben der darzustellenden Bildelemente auf die Farben der Ausgabeeinheit reduziert bzw. mit den vorhandenen Farben der Ausgabeeinheit ausgegeben werden.

Auch sind Ausführungsformen denkbar, bei denen jedem Abschnitt des Dokuments mehrere Darstellungsparameter P zugeordnet sind. Ein Darstellungsparameter P kann dabei die Einstellungen der Farbanpassung und Farbumwandlung festlegen und ein weiterer Darstellungsparameter P die Einstellungen zum Anpassen der Auflösung der Bildelemente. Weitere Darstellungsparameter P sowie weitere Kombinationen von Voreinstellungen sind möglich.

Vorteilhaft ist es auch, dem jeweiligen Abschnitt des Dokuments automatisch einen Darstellungsparameter P zuzuordnen. Die Abschnitte des Dokuments können z.B. nach vorbestimmten Zeichenfolgen, insbesondere nach vorbestimmten Wörtern, durchsucht werden. Bei Übereinstimmung von Wörtern eines durchsuchten Abschnitts wird mit Hilfe einer logischen Verknüpfung diesem Abschnitt ein entsprechender Darstellungsparameter P automatisch zugeordnet.

Die Erfindung wird sowohl zum Erstellen von Dokumenten verwendet als auch zum Ausgeben von Dokumenten verwendet. Weiterhin kann die Erfindung auch bei einem Verfahren zum Erstellen und Ausgeben von Dokumenten genutzt werden.

Bei dem Verfahren zum Erstellen eines Dokuments wird mit Hilfe eines Erstellungs-Programmoduls das Dokument erstellt, das erste Bilddaten von Bildelementen enthält. Den Abschnitten des Dokuments wird jeweils ein Darstellungsparameter P zugeordnet. Mit Hilfe des Darstellungsparameters P wird in einem Ausgabesystem zu einem viel späteren Zeitpunkt automatisch eine Bildverarbeitungs-Prozedur 30 ausgewählt mit der die Bilddaten in zweite Bilddaten umwandelt, die den Ausgabeparametern einer im Ausgabesystem ausgewählten Ausgabeeinheit, z.B- eines Druckers 18, 20, entsprechen.

### Bezugszeichenliste

- 10: Computersystem
- 12: erster Computer
- 14: Textverarbeitungsprogrammodul
- 16: Druckertreiberprogrammodul
- 18,20: Drucker
- 22: Bildschirm
- 24: Tastatur
- 26: Druckseite
- 28 bis 34: Abschnitte eines Dokuments
- 36 bis 42: Druckseiten
- 44: Formular (Registerkarten) des Druckertreibers
- 46, 48: Pull-Down-Menü
- 50 bis 56: Formular (Registerkarten) des Druckertreibers
- 58a bis 58f: Einstellskalen

- P1 bis P13: Darstellungsparameter
- S10 bis S22: Ablaufschritte

## Patentansprüche

1. Verfahren zum Erstellen eines Dokuments,
bei dem mit Hilfe eines Erstellungs-Programmmoduls (14) das Dokument erstellt wird, wobei das Dokument erste Bilddaten von Bildelementen enthält,
und bei dem Abschnitten (28, 30, 32, 34) des Dokuments jeweils ein Darstellungsparameter P zugeordnet wird, durch den ein Ausgabeparametersatz derart festgelegt wird,
dass mit Hilfe einer Ausgabeeinheit (18, 20) auf der Grundlage zweiter Bilddaten Bildelemente des Dokuments ausgebbar sind, deren Bildeigenschaften durch diesen Ausgabeparametersatz festgelegt werden,
dass mit Hilfe eines Ansteuerprogrammmoduls (16) zum Ansteuern der Ausgabeeinheit (18, 20) aus den ersten Bilddaten die zweiten Bilddaten entsprechend dem Ausgabeparametersatz der Ausgabeeinheit (18, 20) Abschnitt für Abschnitt (28, 30, 32, 34) erzeugbar sind,
und dass mit Hilfe der Darstellungsparameter P eine Auswahl von Ausgabeparametern unter einer Vielzahl möglicher Ausgabeparameter für diese Ausgabeeinheit (18, 20) festlegbar ist.

2. Verfahren zum Ausgeben eines Dokuments,
bei dem mit Hilfe einer Ausgabeeinheit erste Bilddaten von Bildelementen des Dokuments, das mit Hilfe eines Erstellungs-Programmmoduls (14) erstellt worden ist, zu zweiten Bilddaten verarbeitet werden,
wobei Abschnitten (28, 30, 32, 34) des Dokuments jeweils ein Darstellungsparameter (P) zugeordnet ist, durch den ein Ausgabeparametersatz festgelegt wird,
mit Hilfe der Ausgabeeinheit (18, 20) auf der Grundlage zweiter Bilddaten Bildelemente des Dokuments ausgegeben werden, deren Bildeigenschaften durch diesen Ausgabeparametersatz festgelegt werden,
mit Hilfe eines Ansteuerprogrammmoduls (16) zum Ansteuern der Ausgabeeinheit (18, 20) aus den ersten Bilddaten die zweiten Bilddaten entsprechend dem Ausgabeparametersatz der Ausgabeeinheit (18, 20) Abschnitt für Abschnitt (28, 30, 32, 34) erzeugt werden,
und bei dem mit Hilfe der Darstellungsparameter (P) eine Auswahl von Ausgabeparametern unter einer Vielzahl möglicher Ausgabeparameter für diese Ausgabeeinheit (18, 20) festlegt werden.

3. Verfahren nach Anspruch 1 oder 2, **dadurch gekennzeichnet, dass** die Ausgabeeinheit (18, 20) ein Drucker ist, und dass das Ansteuerprogrammmodul (16) ein Druckertreiber ist.

4. Verfahren nach einem der vorhergehenden Ansprüche, **dadurch gekennzeichnet, dass** die Abschnitte (28, 30, 32, 34) des Dokuments je nach Darstellungsparameter (P) auf unterschiedlichen Ausgabeeinheiten (18, 20) ausgegeben werden, wobei die Ausgabeeinheit (18, 20) und die Ausgabeparameter mit Hilfe des Darstellungsparameters (P) automatisch ausgewählt werden.

5. Verfahren nach einem der vorhergehenden Ansprüche,. **dadurch gekennzeichnet, dass** der Darstellungsparameter (P) während des Erstellens des Dokuments festgelegt wird.

6. Verfahren nach einem der vorhergehenden Ansprüche, **dadurch gekennzeichnet, dass** mit Hilfe des Erstellungs-Programmmoduls (14) ein von den Ausgabeparametern der Ausgabeeinheit unabhängiges Dokument erstellt wird.

7. Verfahren nach einem der vorhergehenden Ansprüche, **dadurch gekennzeichnet, dass** die Abschnitte (28, 30, 32, 34) des Dokuments grafische Elemente wie Text, Vektorgrafiken, Geschäftsgrafiken, Bilder, Tabellen, Landschaftsfotos und/oder Porträtfotos enthalten.

8. Verfahren nach einem der vorhergehenden Ansprüche, **dadurch gekennzeichnet, dass** die Ausgabeparameter die Auflösung, die Farbtiefe, den Farbraum und das Ausgabemedium der Ausgabeeinheit (18, 20) enthalten.

9. Verfahren nach einem der vorhergehenden Ansprüche, **dadurch gekennzeichnet, dass** mit Hilfe des einem Abschnitt (28, 30, 32, 34) zugeordneten Darstellungsparameters (P) die Druckfarbe festgelegt wird, in der die Bildelemente des Abschnitts ausgegeben werden.

10. Verfahren nach einem der vorhergehenden Ansprüche, **dadurch gekennzeichnet, dass** das Erstellungs-Programmmodul (14) ein Textverarbeitungsprogrammmodul, ein DTP-Programmmodul oder ein Formulargenerator ist.

11. Verfahren nach einem der vorhergehenden Ansprüche, **dadurch gekennzeichnet, dass** das Erstellungs-Programmmodul (14) und das Ansteuerprogrammmodul (16) in separaten Recheneinheiten (12) eines Datenverarbeitungssystems (10) abgearbeitet werden.

12. Verfahren nach einem der vorhergehenden Ansprüche, **dadurch gekennzeichnet, dass** den Abschnitten (28, 30, 32, 34) des Dokuments je zwei Darstellungsparameter(P) zugeordnet werden.

13. Verfahren nach einem der vorhergehenden Ansprüche, **dadurch gekennzeichnet, dass** die Darstellungsparameter (P) automatisch mit Hilfe von in den Abschnitten (28, 30, 32, 34) enthaltenen Daten zugewiesen werden.

14. Verfahren nach Anspruch 13, **dadurch gekennzeichnet, dass** der Text eines jeden Abschnitts (28, 30, 32, 34) nach vorgegebenen Zeichenfolgen durchsucht wird, und dass mit Hilfe von ermittelten übereinstimmenden Zeichenfolgen diesem Abschnitt (28, 30, 32, 34) ein entsprechender Darstellungsparameter (P) zugeordnet wird.

15. Verfahren nach einem der vorhergehenden Ansprüche, **dadurch gekennzeichnet, dass** ein Abschnitt (28, 30, 32, 34) eine Druckseite des Dokuments umfasst.

16. Computersoftware, umfassend Befehle und Daten in codierter Form, die nach dem Laden der Computersoftware ein Computersystem veranlassen, dass die in einem der Ansprüche 1 bis 15 genannten Schritte ausgeführt werden.

17. Computersoftware nach Anspruch 16, **dadurch gekennzeichnet, dass** sie auf einem Speichermedium gespeichert ist.

18. Vorrichtung zum Erstellen eines Dokuments,
die ein Erstellungs-Programmmodul (14) enthält, mit dessen Hilfe das Dokument erstellbar ist,
das erste Bilddaten von Bildelementen enthält, wobei Abschnitten (28, 30, 32, 34) des Dokuments jeweils ein Darstellungsparameter P zugeordnet ist, der einen Ausgabeparametersatz derart festlegt,
dass durch eine Ausgabeeinheit (18, 20) auf der Grundlage zweiter Bilddaten Bildelemente des Dokuments ausgebbar sind, deren Bildeigenschaften durch diesen Ausgabeparametersatz festgelegt sind,
dass durch ein Ansteuerprogrammmodul (16) zum Ansteuern der Ausgabeeinheit (18, 20) aus den ersten Bilddaten die zweiten Bilddaten entsprechend dem Ausgabeparametersatz der Ausgabeeinheit (18, 20) Abschnitt für Abschnitt (28, 30, 32, 34) erzeugbar sind,
und dass der Darstellungsparameter P eine Auswahl von Ausgabeparametern unter einer Vielzahl möglicher Ausgabeparameter für diese Ausgabeeinheit (18, 20) festlegbar ist.

19. Vorrichtung zum Ausgeben eines Dokuments,
die eine Ausgabeeinheit (18, 20) enthält, die erste Bilddaten von Bildelementen des Dokuments das mit Hilfe eines Erstellungs-Programmmoduls (14) erstellt worden ist, zu zweiten Bilddaten verarbeitet,
wobei Abschnitten (28, 30, 32, 34) des Dokuments jeweils ein Darstellungsparameter (P) zugeordnet ist, der einen Ausgabeparametersatz festlegt,
bei der die Ausgabeeinheit (18, 20) auf der Grundlage zweiter Bilddaten Bildelemente ausgibt, deren Bildeigenschaften durch diesen Ausgabeparametersatz festgelegt sind,
die ein Ansteuerprogrammmodul (16) zum Ansteuern der Ausgabeeinheit (18, 20) enthält, das aus den ersten Bilddaten zweite Bilddaten entsprechend dem Ausgabeparametersatz der Ausgabeeinheit (18, 20) Abschnitt für Abschnitt (28, 30, 32, 34) erzeugt,
und die mit Hilfe des Darstellungsparameters (P) eine Auswahl von Ausgabeparametern unter einer Vielzahl möglicher Ausgabeparameter für diese Ausgabeeinheit (18, 20) festlegt.

## Claims

1. A method for creating a document,
in which the document is created with the aid of a creation program module (14), the document containing first image data of picture elements,
and in which sections (28, 30, 32, 34) of the document have a respective presentation parameter (P) allocated to them, which presentation parameter (P) defines an output parameter set such
that with the aid of an output unit (18, 20), picture elements of the document can be outputted on the basis of second image data, the image properties of said picture elements being defined by this output parameter set,
that with the aid of a drive program module (16) for driving the output unit (18, 20), the second image data can be generated in accordance with the output parameter set of the output unit (18, 20) section by section (28, 30, 32, 34) from the first image data,
and that with the aid of the presentation parameter (P) a selection of output parameters from a plurality of possible output parameters for this output unit (18, 20) can be defined.

2. A method for outputting a document,
in which with the aid of an output unit, first image data of picture elements of the document, which has been created with the aid of a creation program module (14), are processed to become second image data,
one presentation parameter (P) each, by which an output parameter set is defined, being allocated to sections (28, 30, 32, 34) of the document,
with the aid of the output unit (18, 20), picture elements of the document are outputted on the basis of second image data, the image properties of said picture elements are defined by this output parameter set,
with the aid of a drive program module (16) for driving the output unit (18, 20), the second image data are generated in accordance with the output parameter set of the output unit (18, 20) section by section (28, 30, 32, 34) from the first image data,
and in which with the aid of the presentation parameter (P) a selection of output parameters from a plurality of possible output parameters for this output unit (18, 20) is defined.

3. The method according to claim 1 or 2, **characterized in that** the output unit (18, 20) is a printer, and **in that** the drive program module (16) is a printer driver.

4. The method according to one of the preceding claims, **characterized in that** the sections (28, 30, 32, 34) of the document are output on different output units (18, 20) dependent on the presentation parameter (P), the output unit (18, 20) and the output parameters being automatically selected with the aid of the presentation parameter (P).

5. The method according to one of the preceding claims, **characterized in that** the presentation parameter (P) is defined during the creation of the document.

6. The method according to one of the preceding claims, **characterized in that** a document that is independent of the output parameters of the output unit is created with the aid of the creation program module (14).

7. The method according to one of the preceding claims, **characterized in that** the sections (28, 30, 32, 34) of the document contain graphics elements such as text, vector graphics, business graphics, images, tables, landscape photos and/or portrait photos.

8. The method according to one of the preceding claims, **characterized in that** the output parameters contain the resolution, the colour depth, the colour model and the output medium of the output unit (18, 20).

9. The method according to one of the preceding claims, **characterized in that** with the aid of the presentation parameter (P) allocated to a section (28, 30, 32, 34), the print colour in which the picture elements of the section are output is determined.

10. The method according to one of the preceding claims, **characterized in that** the creation program module (14) is a text processing program module, a DTP program module or a forms generator.

11. The method according to one of the preceding claims, **characterized in that** the creation program module (14) and the drive program module (16) are processed in separate computing units (12) of a data processing system (10).

12. The method according to one of the preceding claims, **characterized in that** two respective presentation parameters (P) are allocated to the sections (28, 30, 32, 34) of the document.

13. The method according to one of the preceding claims, **characterized in that** the presentation parameters (P) are automatically allocated with the aid of data contained in the sections (28, 30, 32, 34).

14. The method according to claim 13, **characterized in that** the text of each and every section (28, 30, 32, 34) is searched for predetermined character strings, and **in that** a corresponding presentation parameter (P) is allocated to this section (28, 30, 32, 34) with the aid of identified, matching character strings.

15. The method according to one of the preceding claims, **characterized in that** a section (28, 30, 32, 34) comprises a print page of the document.

16. A computer software, comprising commands and data in encoded form that, after the loading of the computer software, initiate a computer system to execute the steps cited in one of the claims 1 to 15.

17. The computer software according to claim 16, **characterized in that** it is stored on a storage medium.

18. A device for creating a document,
which comprises a creation program module (14), with the aid of which the document can be created,
which document contains first image data of picture elements, sections (28, 30, 32, 34) of the document having a respective presentation parameter (P) allocated to them, which presentation parameter (P) defines an output parameter set such
that by means of an output unit (18, 20), picture elements of the document can be outputted on the basis of second image data, the image properties of which picture elements are defined by this output parameter set,
that by a drive program module (16) for driving the output unit (18, 20), the second image data can be generated in accordance with the output parameter set of the output unit (18, 20) section by section (28, 30, 32, 34) from the first image data,
and that with the aid of the presentation parameter (P), a selection of output parameters from a plurality of possible output parameters for this output unit (18, 20) can be defined.

19. A device for outputting a document,
which comprises an output unit (18, 20), which processes first image data of picture elements of the document which has been created with the aid of a creation program module (14) to second image data,
a respective presentation parameter (P), which defines an output parameter set, being allocated to sections (28, 30, 32, 34) of the document,
in which the output unit (18, 20) outputs picture elements on the basis of second image data, the image properties of said picture elements being defined by this output parameter set,
which comprises an drive program module (16) for driving the output unit (18, 20), which module generates second image data in accordance with the output parameter set of the output unit (18, 20) section by section (28, 30, 32, 34) from the first image data,
and which, with the aid of the presentation parameter (P) defines a selection of output parameters from a plurality of possible output parameters for this output unit (18, 20).

## Revendications

1. Procédé d'élaboration d'un document, dans lequel
le document est élaboré à l'aide un module de programme d'élaboration (14), lequel contient des premières données d'image provenant d'éléments d'image, et dans lequel
à chaque section (28, 30, 32, 34) du document est associé un paramètre de présentation (P) permettant de déterminer un ensemble de paramètres d'édition de telle sorte que :
- des éléments d'image du document, dont les propriétés d'image sont déterminées par cet ensemble de paramètres d'édition, peuvent être édités à l'aide d'une unité d'édition (18, 20) en se fondant sur des deuxièmes données d'image,
- les deuxièmes données d'image peuvent être générées section par section (28, 30, 32, 34) à l'aide d'un module de programme de commande (16) destiné à commander l'unité d'édition (18, 20) à partir des premières données d'image en fonction de l'ensemble de paramètres d'édition de l'unité d'édition (18, 20),
- et un choix de paramètres d'édition parmi un grand nombre de paramètres d'édition possibles peut être déterminé pour cette unité d'édition (18, 20) à l'aide des paramètres de présentation (P) .

2. Procédé d'édition d'un document, dans lequel
des premières données d'image provenant d'éléments d'image du document qui a été élaboré à l'aide d'un module de programme d'élaboration (14), ont été traitées pour donner des deuxièmes données d'image,
à chaque section (28, 30, 32, 34) du document est associé un paramètre de présentation (P) permettant de déterminer un ensemble de paramètres d'édition,
des éléments d'image du document, dont les propriétés d'image sont déterminées par cet ensemble de paramètres d'édition, sont délivrés à l'aide de l'unité d'édition (18, 20) en se fondant sur des deuxièmes données d'image,
les deuxièmes données d'image sont générées section par section (28, 30, 32, 34), à l'aide d'un module de programme de commande (16) destiné à commander l'unité d'édition (18, 20), à partir des premières données d'image en fonction de l'ensemble de paramètres d'édition de l'unité d'édition (18, 20),
et un choix de paramètres d'édition parmi un grand nombre de paramètres d'édition possibles est déterminé pour cette unité d'édition (18, 20) à l'aide des paramètres de présentation (P).

3. Procédé selon la revendication 1 ou 2,
**caractérisé en ce que** l'unité d'édition (18, 20) est une imprimante, et **en ce que** le module de programme de commande (16) est un pilote d'imprimante.

4. Procédé selon l'une des revendications précédentes, **caractérisé en ce que** les sections (28, 30, 32, 34) du document sont éditées sur chacune des différentes unités d'édition (18, 20) en fonction du paramètre de présentation (P), l'unité d'édition (18, 20) et les paramètres d'édition étant choisis automatiquement à l'aide du paramètre de présentation (P) .

5. Procédé selon l'une des revendications précédentes, **caractérisé en ce que** le paramètre de présentation (P) est déterminé pendant l'élaboration du document.

6. Procédé selon l'une des revendications précédentes, **caractérisé en ce qu'**un document indépendant des paramètres d'édition de l'unité d'édition est établi à l'aide du module de programme d'élaboration (14).

7. Procédé selon l'une des revendications précédentes, **caractérisé en ce que** les sections (28, 30, 32, 34) du document contiennent des éléments graphiques tels que du texte, des graphiques vectoriels, des logos, des images, des tableaux, des photos en mode paysage et/ou des photos en mode portrait.

8. Procédé selon l'une des revendications précédentes, **caractérisé en ce que** les paramètres d'édition comprennent par exemple la résolution, la profondeur des couleurs, la gamme des couleurs et le support d'édition de l'unité d'édition (18, 20).

9. Procédé selon l'une des revendications précédentes, **caractérisé en ce que** la couleur d'impression, dans laquelle sont édités les éléments d'image de la section, est déterminée à l'aide du paramètre de présentation (P) associé à une section (28, 30, 32, 34).

10. Procédé selon l'une des revendications précédentes, **caractérisé en ce que** le module de programme d'élaboration (14) est un module de programme de traitement de texte, un module de programme DTP (publication assistée par ordinateur), ou un générateur de formulaires.

11. Procédé selon l'une des revendications précédentes, **caractérisé en ce que** le module de programme d'élaboration (14) et le module de programme de commande (16) sont traités dans des unités de calcul séparées (12) d'un système de traitement de données (10).

12. Procédé selon l'une des revendications précédentes, **caractérisé en ce que** deux paramètres de présentation (P) sont associés à chacune des sections (28, 30, 32, 34) du document.

13. Procédé selon l'une des revendications précédentes, **caractérisé en ce que** les paramètres de présentation (P) sont attribués automatiquement à l'aide de données contenues dans les sections (28, 30, 32, 34).

14. Procédé selon la revendication 13, **caractérisé en ce que** l'on recherche dans le texte de chaque section (28, 30, 32, 34) des suites de caractères prédéterminées, et **en ce qu'**un paramètre de présentation approprié (P) est associé à cette section (28, 30, 32, 34) à l'aide de chaînes de caractères déterminées concordantes.

15. Procédé selon l'une des revendications précédentes, **caractérisé en ce qu'**une section (28, 30, 32, 34) comporte une page d'impression du document.

16. Logiciel, comportant des instructions et des données sous forme codée qui ordonne à un système informatique, après le chargement du logiciel, de réaliser les étapes mentionnées dans l'une des revendications 1 à 15.

17. Logiciel selon la revendication 16,
**caractérisé en ce qu'**il est enregistré sur un support de mémorisation.

18. Dispositif d'élaboration d'un document,
lequel dispositif contient un module de programme d'élaboration (14) permettant d'élaborer le document,
lequel document contient des premières données d'image provenant d'éléments d'image, à chaque section (28, 30, 32, 34) du document étant associé un paramètre de présentation (P) permettant de déterminer un ensemble de paramètres d'édition de telle sorte que :
- des éléments d'image du document, dont les propriétés d'image sont déterminées par cet ensemble de paramètres d'édition, peuvent être édités à l'aide d'une unité d'édition (18, 20) en se fondant sur des deuxièmes données d'image,
- les deuxièmes données d'image peuvent être générées section par section (28, 30, 32, 34) à l'aide d'un module de programme de commande (16) destiné à commander l'unité d'édition (18, 20) à partir des premières données d'image en fonction de l'ensemble de paramètres d'édition de l'unité d'édition (18, 20),
- et un choix de paramètres d'édition parmi un grand nombre de paramètres d'édition possibles peut être déterminé pour cette unité d'édition (18, 20) à l'aide des paramètres de présentation (P).

19. Dispositif d'édition d'un document,
qui contient une unité d'édition (18, 20) qui traite des premières données d'image provenant d'éléments d'image du document, qui a été élaboré à l'aide d'un module de programme d'élaboration (14), pour donner des deuxièmes données d'image,
à chaque section (28, 30, 32, 34) du document étant associé un paramètre de présentation (P) permettant de déterminer un ensemble de paramètres d'édition,
dans lequel l'unité d'édition (18, 20) délivre des éléments d'image, dont les propriétés d'image sont déterminées par cet ensemble de paramètres d'édition, en se fondant sur des deuxièmes données d'image,
qui contient un module de programme de commande (16), destiné à commander l'unité d'édition (18, 20), qui génère les deuxièmes données d'image section par section (28, 30, 32, 34), à partir des premières données d'image en fonction de l'ensemble de paramètres d'édition de l'unité d'édition (18, 20),
et qui détermine pour cette unité d'édition (18, 20) un choix de paramètres d'édition parmi un grand nombre de paramètres d'édition possibles à l'aide des paramètres de présentation (P).
